# FASCICULE DE BREVET EUROPEEN

(11) **EP 0 443 897 B1**
(45) Date de publication et mention de la délivrance du brevet: **22.12.1993**
(21) Numéro de dépôt: 91400248.0
(22) Date de dépôt: 01.02.1991
(51) Int. Cl.: B64D 11/04

(54) **Système pour l'approvisionnement d'une enceinte en chariots ou analogue**
Förderungsanlage für ein Gehäuse mit Lagerwagen oder dergleichen
Device to provide trolleys or similar to an enclosure

(30) Priorité: 19.02.1990 FR 9001967
(43) Date de publication de la demande: 28.08.1991
(73) Titulaire: AEROSPATIALE Société Nationale Industrielle, 75781 Paris Cédex 16 (FR)
(72) Inventeur: Rezag, André, F-31700 Blagnac (FR); Ferretti, Antoine, F-31000 Toulouse (FR)
(74) Mandataire: Bonnetat, Christian

(56) Documents cités:
- GB-A- 2 131 779
- US-A- 32 176
- US-A- 4 804 307

## Description

La présente invention concerne un système pour l'approvisionnement d'une enceinte en chariots ou analogue.

Quoique non exclusivement, le système selon l'invention est plus particulièrement destiné à être installé à bord des aéronefs, pour assurer l'approvisionnement des chariots, contenant des plateaux repas, des boissons, des revues, etc... et stockés initialement dans la soute de l'aéronef, dans une enceinte située dans la cabine des passagers dudit aéronef. Un tel système pourrait, bien évidemment, être monté à bord d'avions-cargos pour amener des chariots, contenant du matériel, de la soute, où ils sont entreposés, vers le pont supérieur.

Les systèmes connus sont usuellement prévus dans la cabine des passagers des aéronefs, l'ensemble des chariots, contenant notamment les produits alimentaires, étant stockés dans des armoires situées dans la cabine des passagers à proximité d'une ou plusieurs enceintes, telles que des offices, dans lesquelles sont disposés le matériel de cuisine, le four, le réfrigérateur, etc... Le personnel de bord peut ainsi effectuer différentes tâches comme le réchauffage des plats, la préparation des boissons, et procéder à la distribution des plateaux repas contenus dans les chariots.

Si ce type d'agencement est avantageux pour le personnel de bord du fait de la proximité sur un même niveau des chariots de stockage de nourriture et des offices, en revanche, un tel agencement occupe un volume important dans la cabine des passagers, au détriment du nombre de sièges des passagers.

Aussi, pour tenter de pallier cet inconvénient et accroître le nombre des sièges et, par conséquent, améliorer la rentabilité des avions, on a déjà proposé une solution qui consiste en l'aménagement d'une partie de la soute de l'avion pour y loger les chariots de stockage de nourriture et les offices (US-A-32 176). Cette solution a notamment été expérimentée sur l'avion DC 10 de Mc Donnell Douglas.

Bien que ce système permette d'optimiser le nombre des sièges des passagers transportables, puisque les offices et les chariots de stockage sont situés dans la soute, il n'en présente pas moins des inconvénients notamment du point de vue des nombreuses modifications techniques à apporter sur l'appareil. En effet, outre l'aménagement d'une partie importante de la soute au détriment alors du fret susceptible d'être embarqué, il est nécessaire de pressuriser et de climatiser la partie de la soute aménagée, de prévoir un escalier d'accès entre la soute et la cabine des passagers, et d'installer un monte-charge pour transférer les chariots de la soute vers la cabine des passagers. Par ailleurs, l'aménagement de la soute reste malgré tout très inconfortable pour le personnel de bord en raison de la faible hauteur de la soute et des incessants va-et-vient entre la soute et la cabine des passagers.

Par conséquent, pour ces différentes raisons, cette solution n'a pas été retenue pour d'autres appareils, de sorte que, actuellement, les chariots contenant notamment les plateaux repas, les boissons et les revues sont stockés dans des armoires en cabine des passagers, à proximité des offices.

La présente invention a pour objet de remédier à ces inconvénients et concerne un système d'approvisionnement d'une enceinte en chariots ou analogue, prévue dans la cabine des passagers d'un aéronef, qui permet d'augmenter le nombre de sièges pour passagers dans l'aéronef, sans recourir à des modifications importantes de celui-ci, et de contribuer à l'amélioration des conditions de travail du personnel de bord.

A cet effet, le système d'approvisionnement d'une enceinte en chariots ou analogue, prévu notamment dans la cabine des passagers d'un aéronef, est remarquable, selon l'invention, en ce qu'il comprend :
- au moins un conteneur de stockage dans lequel sont agencés lesdits chariots et qui est situé dans la soute dudit aéronef ;
- un automate commandable prévu dans la soute dudit aéronef qui est agencé dans un conteneur, adjacent au conteneur de stockage desdits chariots et susceptible de se déplacer pour saisir dans ledit conteneur, par des moyens de préhension, chacun desdits chariots puis l'amener à ladite enceinte par l'intermédiaire d'un passage ménagé entre ladite soute et ladite enceinte, ledit passage débouchant dans le conteneur portant l'automate ; et,
- une unité de commande programmable reliée audit automate et contenant les informations relatives à la position desdits chariots dans le conteneur et aux types de produits contenus dans chacun d'eux, de façon que, en fonction des informations transmises par ladite unité, ledit automate se déplace pour saisir ledit chariot correspondant et l'amener de ladite soute à ladite enceinte.

Ainsi, le système selon l'invention permet de pallier les inconvénients des solutions évoquées préalablement. En effet, comme les chariots contenant les plateaux repas, les boissons, les revues etc... sont alors stockés dans la soute, des sièges supplémentaires peuvent être installés en cabine, augmentant considérablement la capacité de transport en passagers de l'aéronef. Par ailleurs, l'enceinte, accessible au personnel de bord, est avantageusement maintenue au niveau de la cabine des passagers facilitant le travail du personnel. En pilotant l'unité de commande, chaque membre du personnel de bord peut ainsi choisir le chariot dont il a besoin et correspondant, par exemple, à un type spécifique de plateaux repas, le chariot étant amené automatiquement du conteneur de stockage à ladite enceinte par l'automate. L'aménagement de la soute de l'aéronef ne soulève pas de problèmes particuliers, puisque les chariots et l'automate sont agencés dans des conteneurs respectifs correspondant avantageusement à ceux utilisés pour le transport du fret et des bagages. Leur chargement et leur déchargement de la soute, ainsi que leur fixation à la structure de la soute, s'effectuent aisément, sans adaptation particulière, de la même façon que les conteneurs de transport de fret.

Dans un mode préféré de réalisation, ledit automate déplaçable se compose :
- d'une embase, liée à la base dudit conteneur et susceptible de se déplacer par rapport à la base selon deux axes X-X et Y-Y perpendiculaires entre eux, ledit axe X-X étant parallèle à l'axe longitudinal de l'aéronef ;
- d'une potence, prolongeant ladite embase et susceptible de pivoter, par rapport à l'embase, autour d'un axe de rotation R orthogonal au plan formé par les axes X-X et Y-Y de la base, ainsi qu'à l'axe longitudinal de l'aéronef ; et,
- d'un dispositif de levage, comprenant lesdits moyens de préhension et monté articulé sur la potence autour d'un axe de rotation R1, parallèle à l'axe de rotation R de la potence, lesdits moyens de préhension étant susceptibles de coulisser selon un axe Z-Z parallèle aux axes de rotation R et R1 et orthogonal au plan formé par les axes X-X et Y-Y.

Par exemple, ladite embase de l'automate peut être montée sur au moins un premier rail de guidage, correspondant à l'axe X-X et le long duquel l'embase est susceptible de se déplacer, ledit premier rail de guidage étant lui-même monté, de façon coulissante, sur au moins un second rail de guidage correspondant à l'axe Y-Y et fixé à la base dudit conteneur. La conception des déplacements en X-X et en Y-Y de l'automate par les rails de guidage orthogonaux, qui forment une table à mouvements croisés, garantit à l'usage un fonctionnement fiable de l'automate.

Quant au dispositif de levage dudit automate, il peut comprendre une partie fixe montée articulée sur la potence autour de l'axe de rotation R1 et une partie monile correspondant auxdits moyens de préhension et susceptible de coulisser le long de l'axe Z-Z par des moyens de levage associés aux deux parties. Là aussi, la conception mécaniquement simple du dispositif de levage procure à l'usage un fonctionnement fiable et sûr de l'automate.

Par ailleurs, ledit conteneur de stockage présente de préférence une pluralité de compartiments, destinés à la réception desdits chariots et alignés selon une direction orthogonale à l'axe longitudinal dudit aéronef.

Selon une autre caractéristique dudit système, lesdits chariots sont avantageusement logés dans des réceptacles, chaque réceptacle, qui contient un chariot, étant lui-même agencé dans l'un des compartiments dudit conteneur de stockage en étant susceptible d'être retiré dudit compartiment, par les moyens de préhension de l'automate, selon une direction parallèle à l'axe longitudinal de l'aéronef.

Dans un mode préféré de réalisation, lesdits réceptacles présentent une forme parallélépipédique correspondant à celle desdits compartiments et chaque réceptacle est pourvu d'une ouverture latérale par laquelle est susceptible d'être introduit ou retiré le chariot correspondant.

Avantageusement, chacun desdits chariots est immobilisé dans le réceptacle correspondant par un mécanisme à levier basculant, monté pivotant sur chaque réceptacle et s'appliquant contre la face latérale dudit chariot qui obture l'ouverture du réceptacle. Lorsque le réceptacle transféré se trouve dans l'enceinte, le personnel de bord ex trait le chariot du réceptacle après avoir agi sur le mécanisme à levier. A ce stade, le réceptacle vide, situé dans l'enceinte de réception, peut être ramené directement, par l'automate, dans son compartiment ou alors ledit automate peut attendre que la distribution des produits contenus dans le chariot soit effectuée pour ramener l'ensemble constitué du réceptacle et du chariot, alors vide, dans le compartiment.

De plus, pour autoriser l'introduction de la surface d'appui correspondante desdits moyens de préhension sous la face inférieure du réceptacle, la base de chaque compartiment, sur laquelle repose le réceptacle, présente un évidement.

Par ailleurs, des moyens de blocage immobilisent en position le réceptacle contenant le chariot choisi aux moyens de préhension dudit automate, afin que le transfert du réceptacle porté par les moyens de préhension s'effectue sans incident.

Dans un mode préféré de réalisation, lesdits moyens de blocage sont du type électromagnétique et comprennent des plaques métalliques fixées aux surfaces d'appui des moyens de préhension et qui sont susceptibles de coopérer avec des plaques métalliques situées en correspondance sur la face inférieure et sur la face latérale de chaque réceptacle, opposée à ladite ouverture latérale.

Par ailleurs, lesdits réceptacles sont immobilisés respectivement dans les compartiments dudit conteneur par des moyens de verrouillage libérables. A cet effet, lesdits moyens de verrouillage peuvent être associés à la face inférieure de chaque réceptacle et comprennent au moins un boîtier comportant un mécanisme à deux tiges déplaçables coopérant perpendiculairement l'une avec l'autre par une rampe inclinée, l'une des extrémités d'une tige faisant saillie de la face latérale du réceptacle, tournée vers ledit automate et opposée à l'ouverture, et l'une des extrémités de l'autre tige s'engageant dans la cloison de séparation de deux compartiments adjacents en immobilisant ledit réceptacle au conteneur de sorte que, sous l'action des moyens de préhension de l'automate, l'extrémité en saillie de ladite tige s'enfonce dans ledit boîtier tandis que, simultanément, l'extrémité de l'autre tige, sous l'action d'un ressort de rappel, se dégage de la cloison en libérant ainsi le réceptacle du compartiment correspondant dudit conteneur.

Pour faciliter le coulissement des réceptacles par rapport aux compartiments, chaque réceptacle est monté sur des chemins de roulement liés à la base de chacun des compartiments. Selon une autre caractéristique dudit système, ladite unité de commande programmable comporte, par exemple, un micro-ordinateur situé dans l'enceinte de réception desdits chariots.

Les figures du dessin annexé feront bien comprendre comment l'invention peut être réalisée. Sur ces figures, des références identiques désignent des éléments semblables.

La figure 1 est une vue schématique en coupe transversale du fuselage d'un aéronef, dans lequel est agencé le système selon l'invention permettant l'approvisionnement d'une enceinte, prévue dans la cabine des passagers, en chariots stockés dans des conteneurs situés dans la soute dudit aéronef.

La figure 2 est une coupe longitudinale du fuselage de l'aéronef, selon la ligne II-II de la figure 1, et montrant l'agencement dudit système dans le fuselage de l'aéronef.

La figure 3 représente une vue en perspective d'un mode préféré de réalisation de l'automate dudit système, autorisant le transfert des chariots disposés dans les conteneurs de la soute vers l'enceinte.

Les figures 4 et 5 illustrent respectivement des vues en perspective avant et arrière d'un des réceptacles dans lequel est logé un chariot et qui est destiné à être introduit dans un compartiment correspondant dudit conteneur.

Les figures 6 et 7 sont respectivement des vues en perspective avant et arrière d'un des conteneurs de stockage dans les compartiments desquels sont reçus des réceptacles contenant lesdits chariots.

La figure 8 représente une vue en coupe d'un des compartiments d'un conteneur, dans lequel est reçu le réceptacle porte-chariot.

La figure 9 est une vue de réceptacle selon la flèche F de la figure 8.

La figure 10 est une vue en coupe selon la ligne X-X de la figure 8, montrant l'immobilisation du réceptacle porte-chariot dans le compartiment correspondant du conteneur par l'intermédiaire de moyens de verrouillage.

La figure 11 est une vue agrandie des moyens de verrouillage illustrés sur la figure 10.

Les figures 12 et 13 sont respectivement des vues en coupe des moyens de verrouillage selon les lignes XII-XII et XIII-XIII de la figure 11.

La figure 14 est une vue analogue à la figure 11 montrant l'effacement des moyens de verrouillage du réceptacle audit conteneur, sous l'action dudit automate.

Les figures 15A,15B et 15C montrent les différentes étapes de fonctionnement dudit système depuis la saisie d'un des réceptacles porte-chariots dudit conteneur par l'automate jusqu'au moment de son transfert en direction de ladite enceinte.

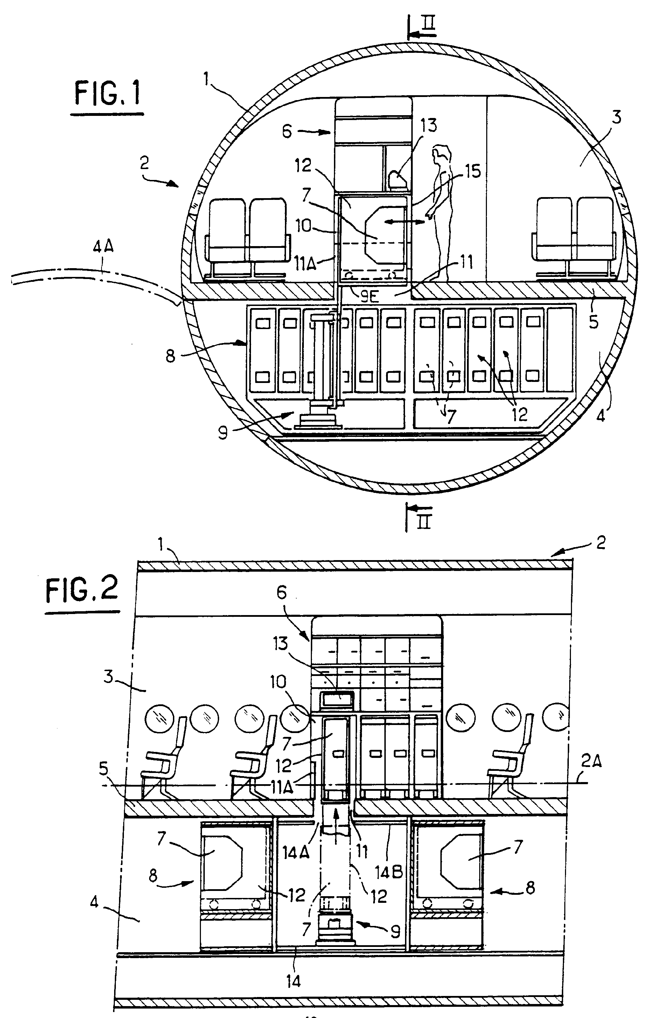

En se référant aux figures 1 et 2, le fuselage 1 de l'aéronef, schématiquement représenté, comporte deux zones distinctes, à savoir une zone supérieure correspondant à la cabine 3 des passagers et une zone inférieure correspondant à la soute 4 prévue pour la réception du fret et des bagages. La cabine 3 est séparée de la soute 4 par un plancher 5.

Le système selon l'invention est destiné à approvisionner une enceinte 6, située dans la cabine 3 des passagers, en chariots 7 qui contiennent notamment les plateaux repas, les boissons, les revues, etc... L'enceinte 6 correspond à un office usuellement agencé dans la cabine 3 et qui comporte le matériel de cuisine nécessaire pour permettre au personnel de bord d'effectuer les différentes tâches du service.

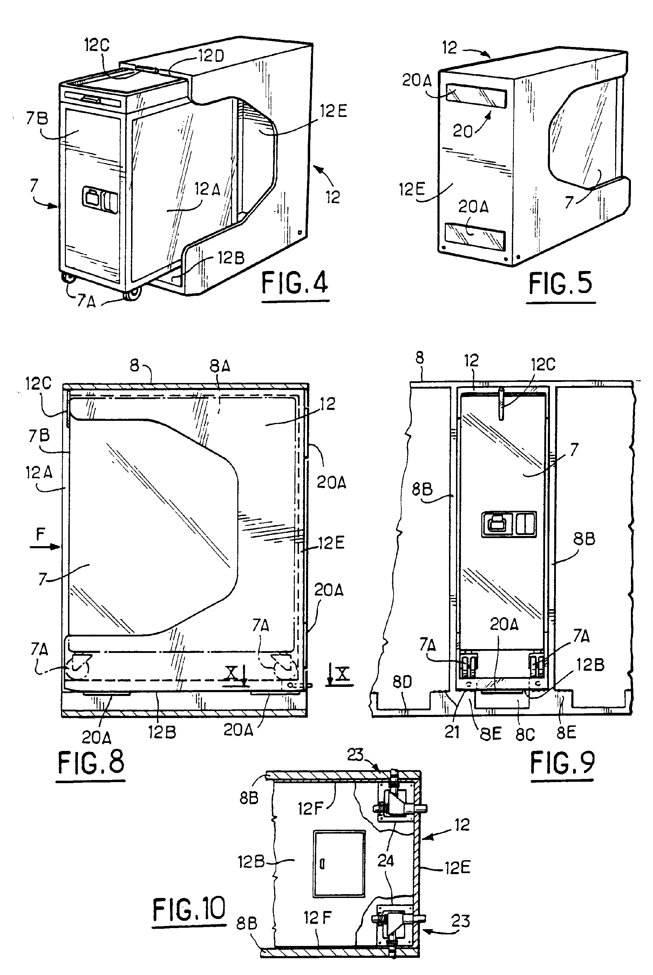

Le système comprend, dans le mode de réalisation illustré, deux conteneurs identiques 8 qui sont situés dans la soute 4 de l'aéronef 2 et dans lesquels sont stockés les chariots 7. Un automate commandable 9 est prévu dans la soute et il est susceptible de se déplacer pour saisir unitairement, par l'intermédiaire de moyens de préhension, lesdits chariots 7 logés dans chaque conteneur pour les amener à un emplacement de réception 10 situé dans l'office 6, par l'intermédiaire d'un passage 11 ménagé dans le plancher 5 entre la soute 4 et la cabine 3, une trappe d'accès 11A étant prévue dans le passage 11. Avantageusement, pour faciliter le transfert desdits chariots 7 par l'automate 9, ceux-ci sont logés dans des réceptacles 12, eux-mêmes logés dans les conteneurs 8 et qui seront plus particulièrement décrits en regard des figures 4 à 7. Ainsi, l'automate saisit le réceptacle contenant le chariot choisi. Le système comprend également une unité de commande programmable 13 reliée à l'automate 9 et contenant les informations relatives à la position des chariots 7 stockés dans les conteneurs 8 et aux types de produits contenus dans chaque chariot. L'unité de commande 13 peut être par exemple un micro-ordinateur disposé dans l'office 6.

Chaque membre du personnel de bord peut obtenir, par l'intermédiaire du micro-ordinateur 13, le chariot dont il a besoin, l'automate 9 qui reçoit les informations transmises par le micro-ordinateur 13 se déplaçant pour saisir le réceptacle 12 contenant le chariot correspondant et l'amener du conteneur 8 à l'emplacement de réception 10 de l'office 6.

Sur ces figures 1 et 2, on a représenté un réceptacle 12, contenant un chariot 7, amené par l'automate 9 dans l'emplacement de réception 10. A ce stade, le personnel de nord, en ouvrant une porte d'accès 15 à l'emplacement 10 peut sortir le chariot 7 du réceptacle 12.

Sur la figure 2, les deux conteneurs 8 sont respectivement disposés de part et d'autre de l'automate 9 qui est agencé dans un conteneur 14. Le passage 11 débouche alors dans le conteneur 14 par un trou 14A prévu dans sa paroi supérieure 14B. La section du passage 11 est, bien évidemment, supérieure à celle des réceptacles 12 portant les chariots 7.

Les conteneurs 8 et 14 utilisés dans le système sont du type standard, analogues à ceux habituellement utilisés par le transport des bagages et du fret, de sorte que le coût d'installation du système dans les aéronefs s'en trouve considérablement réduit.

On peut donc agencer sans difficulté les conteneurs 8 et 14 dans la soute de l'aéronef 2, leur chargement ou leur déchargement se déroulant de la même façon que les conteneurs usuels, par exemple, via une porte de soute 4A représentée en traits mixtes sur la figure 1. Les conteneurs 8 et 14 sont ensuite fixés à la structure de la soute par des mécanismes, non représentés, mais identiques à ceux usuellement utilisés.

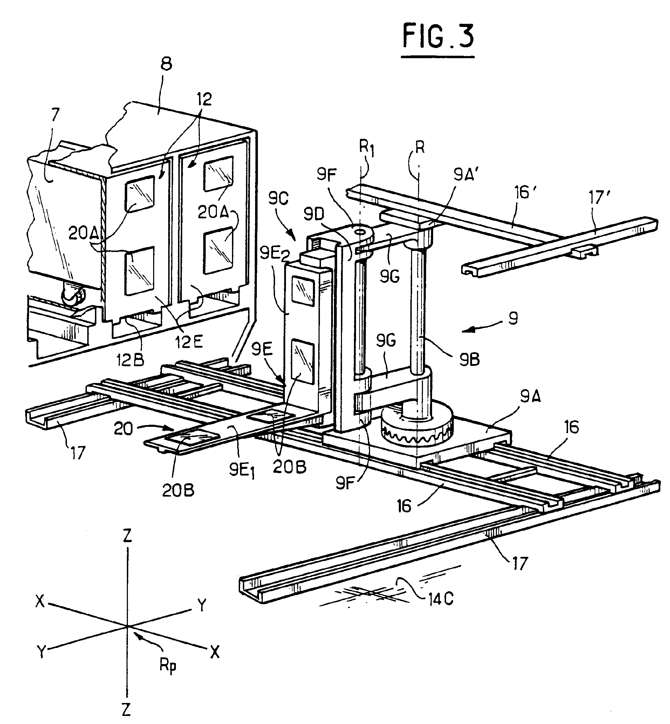

En regard de la figure 3, l'automate 9 comprend une embase 9A reposant, dans ce mode de réalisation, sur deux premiers rails de guidage 16 identiques et distants parallèlement l'un de l'autre, ce qui assure ainsi une bonne stabilité de l'automate. L'embase 9A de ce dernier peut, par des moyens moteurs non représentés, se déplacer le long des rails 16 selon une direction correspondant à l'axe X-X du repère Rp, parallèle à l'axe longitudinal 2A de l'aéronef 2 représenté sur la figure 2. Les extrémités des deux premiers rails de guidage 16 sont montées respectivement sur deux seconds rails de guidage 17 parallèles entre eux et orthogonaux aux premiers rails 16. Ces seconds rails de guidage 17 sont fixés à la base 14C du conteneur, opposée à la paroi supérieure 14B. De la sorte, l'automate 9 peut également se déplacer le long des rails 17, par l'intermédiaire des rails 16 et de moyens moteurs non représentés, selon une direction correspondant à l'axe Y-Y du repère Rp.

L'embase 9A est prolongée par une potence 9B qui est montée rotative, par rapport à l'embase 9A, autour d'un axe de rotation R, orthogonal au plan formé par les rails 16 et 17 et à l'axe longitudinal 2A de l'aéronef. Des moyens moteurs non représentés sont susceptibles d'entraîner en rotation la potence autour de l'axe R. Par ailleurs, l'automate 9 comprend également un dispositif de levage 9C monté, dans le mode de réalisation illustré, articulé à la potence 9B autour d'un axe de rotation R1 parallèle à l'axe R.

Ce dispositif de levage 9C se compose d'une partie figure 9D articulée à la potence 9B autour de l'axe R1 grâce à des chapes 9F dans lesquelles s'engagent des pattes 9G prolongeant radialement la potence, et, d'une partie mobile 9E, qui correspond aux moyens de préhension dudit automate et qui est destinée à saisir puis à amener chacun des réceptacles contenant les chariots des conteneurs 8 à l'office 6.

Des moyens de levage, non représentés, sont prévus entre les deux parties 9D et 9E. Ainsi, la partie mobile 9E correspondant aux moyens de préhension est susceptible de se déplacer le long d'une direction, correspondant à l'axe Z-Z du repère Rp et parallèle aux axes R et R1.

Ces moyens de préhension 9E comportent deux surfaces d'appui 9E₁ et 9E₂ orthogonales entre elles et formant un dièdre. La surface d'appui 9E1 est contenue dans le plan formé par les axes X-X et Y-Y, tandis que la surface d'appui 9E2 est parallèle à l'axe Z-Z et orthogonale au plan X-X et Y-Y correspondant à la base 14C du conteneur 14.

Comme le montre partiellement la figure 3, on peut également prévoir des rails de guidage 16′ et 17′ identiques aux précédents dans la partie haute du conteneur 14. Les rails 17′ sont alors fixés à la paroi supérieure 14B du conteneur 14, tandis que le rail 16′ coulisse par ses extrémités sur les rails 17′.

Au rail de guidage 16′ est associée une embase 9A′ de l'automate, dans laquelle est montée tourillonnante l'autre extrémité de la potence 9B. Un tel montage de l'automate 9 dans le conteneur 14 lui confère une excellente stabilité lors de ses différents déplacements.

Sur cette figure 3, on a représenté partiellement l'un des conteneurs 8 dans lequel sont stockés les réceptacles 12 contenant les chariots 7, les réceptacles 12 étant susceptibles d'être saisis par les surfaces 9E1 et 9E2 des moyens de préhension et étant disposés dans les conteneurs parallèlement à l'axe X-X.

En regard des figures 4 et 5, chaque réceptacle 12 présente une forme parallélépipédique en étant pourvu d'une ouverture latérale 12A par laquelle est destiné à être retiré ou introduit le chariot 7. Ainsi, on voit sur la figure 4 que chaque chariot 7 s'insère parfaitement dans le réceptacle 12, en reposant par ses roulettes 7A sur la face inférieure 12B du réceptacle. L'immobilisation du chariot 7 alors introduit dans le réceptacle 12 est réalisée, par exemple, par un mécanisme à levier 12C monté pivotant sur le bord supérieur 12D du réceptacle, délimitant l'ouverture 12A. Chaque chariot 7, engagé dans le réceptacle, est immobilisé dans celui-ci lorsque le mécanisme à levier 12C est basculé, le levier s'appliquant contre la face latérale avant 7B du chariot.

Par ailleurs, il est prévu des moyens 20 pour immobiliser en position les réceptacles 12 aux moyens de préhension 9E de l'automate 9 lors de leur transfert des conteneurs 8 à l'emplacement de réception 10. Ces moyens d'immobilisation 20 sont, dans ce mode de réalisation, du type électromagnétique. Pour cela, ils sont constitués, par exemple, de deux plaques métalliques 20A situées d'une part, sur la face latérale 12E de chaque réceptacle 12, opposée à l'ouverture 12A, et d'autre part, sur la face inférieure 12B de chacun d'eux, l'ensemble de ces quatre plaques 20A étant susceptibles de coopérer avec quatre plaques métalliques 20B situées en correspondance sur les surfaces d'appui 9E1 et 9E2 des moyens de préhension, comme le montre notamment la figure 3.

En se référant aux figures 6 et 7, chaque conteneur 8 est pourvu d'une pluralité de compartiments 8A qui sont séparés par des cloisons transversales 8B. Dans chacun de ces compartiments 8A est reçu un réceptacle 12 dans lequel est agencé un chariot 7. Les dimensions de ces compartiments 8A correspondent sensiblement à celles desdits réceptacles 12. La disposition de ces derniers dans les compartiments de stockage des conteneurs 8 est telle que la face latérale arrière 12E de chacun d'eux, portant les plaques métalliques 20A, soit en regard du conteneur 14 portant l'automate 9. La sortie des réceptacles hors de leurs compartiments au moyen de l'automate s'effectue selon une direction parallèle à l'axe X-X ou à l'axe longitudinal 2A de l'aéronef, comme on le verra plus particulièrement en regard de la figure 15A.

Par ailleurs, un évidement 8C en forme de U est ménagé dans la base 8D de chaque compartiment 8A des conteneurs 8, sur laquelle repose la face inférieure 12B du réceptacle 12. Cet évidaient 8C permet l'introduction de la surface d'appui 9E1 des moyens de préhension sous la face inférieure 12B du réceptacle. Chaque réceptacle 12 repose par conséquent sur deux bordures 8E parallèles de la base 8D et séparées par l'évidemment 8C.

L'agencement d'un réceptacle 12 contenant un chariot 7 dans l'un des compartiments 8A est notamment représenté sur les figures 8 à 10. Le chariot 7 est immobilisé dans le réceptacle 12 grâce au mécanisme à levier 12C, tandis que, pour faciliter la sortie ou la rentrée des réceptacles desdits compartiments 8A, des chemins de roulaient, tels que, par exemple, des patins à circulation de rouleaux 21 schématiquement représentés, sont liés aux bordures 8E de chaque compartiment. De la sorte, le coulissement des réceptacles 12, reposant par leurs faces inférieures 12B sur les patins 21, s'effectue aisément.

En outre, chacun des réceptacles 12 est immobilisé dans son compartiment correspondant 8A par des moyens de verrouillage 23, qui sont plus particulièrement illustrés en regard des figures 10 à 13.

Ces moyens de verrouillage 23 sont prévus, dans ce mode de réalisation, aux deux coins de la face inférieure 12B de chaque réceptacle, opposés à l'ouverture 12A, et ils comprennent, pour chaque coin, un boîtier 24 fixé par des vis 24A à la face inférieure 12B de chaque réceptacle. A l'intérieur du boîtier 24 est agencé un mécanisme à deux tiges déplaçables 25 et 26 coopérant perpendiculairement l'une avec l'autre et disposées dans un plan parallèle à la face inférieure 12B.

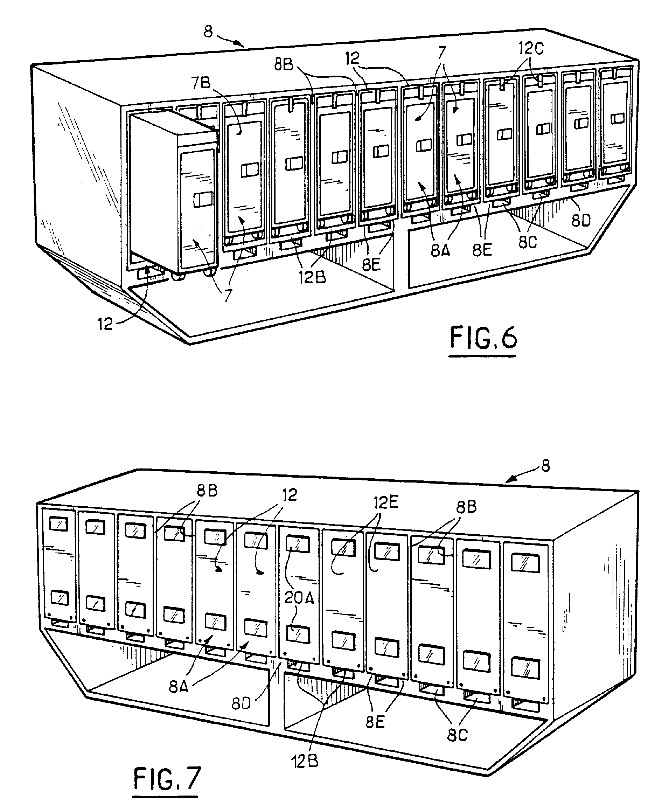

En se référant plus particulièrement aux figures 11 à 13, l'une 25A des extrémités de la tige 25 du mécanisme fait saillie perpendiculairement de la face latérale 12E du réceptacle, tournée vers l'automate. L'autre extrémité 25B est portée par le boîtier 24, tandis que la partie médiane 25C de la tige présente une rampe inclinée 25D avec laquelle coopère l'une des extrémités 26A de la tige 26, dont la face 26B est biseautée. L'autre extrémité 26C de la tige 26 traverse le boîtier et la face latérale correspondante 12F du réceptacle pour s'engager dans un perçage 8F ménagé dans la cloison de séparation 8B des deux compartiments adjacents 8A du conteneur 8.

Un ressort 27 entoure l'extrémité 25B de la tige 25 en venant en appui contre le boîtier 24 et la partie médiane 25C de la tige 25, tandis qu'un autre ressort 28 entoure, quant à lui, la tige 26 en venant en appui contre le boîtier et un épaulement 26D prévu sur la tige 26.

Par ailleurs, une gorge 25E est ménagée dans la rampe 25D de la tige 25, avec laquelle coopère une bille 26E liée à la face biseautée 26B de l'extrémité 26A de la tige 26. On prévoit, de plus, pour maintenir en coopération les deux tiges, deux plaques 29 situées respectivement de part et d'autre de la rampe 25D et liées au boîtier 24. Deux méplats 30 sont ménagés sur la partie médiane 25C de la tige 25 avec lesquels coopèrent les plaques 29 de façon à éviter ainsi la rotation de la tige 25.

Ces figures 11 à 13 montrent les moyens de verrouillage 23 immobilisant le réceptacle correspondant 12 au compartiment 8A de l'un des containers 8.

Le fonctionnement du système selon l'invention sera plus particulièrement décrit en regard des figures 15A à 15C.

On suppose que le personnel de bord désire le chariot 7 qui contient par exemple un type spécifique de plateaux repas et qui est agencé dans le réceptacle 12 situé sur la figure 15A à l'extrême droite du conteneur avant 8 par rapport à l'axe longitudinal de l'aéronef.

Avant de déclencher le cycle de fonctionnement de l'automate 9, le personnel de bord s'assure, notamment par des voyants de contrôle prévus sur l'unité de commande 13, que l'automate occupe sa position initiale, correspondant par exemple à celle où les moyens de préhension sont à la verticale du passage 11, et que la porte d'accès 15 à l'emplacement est fermée.

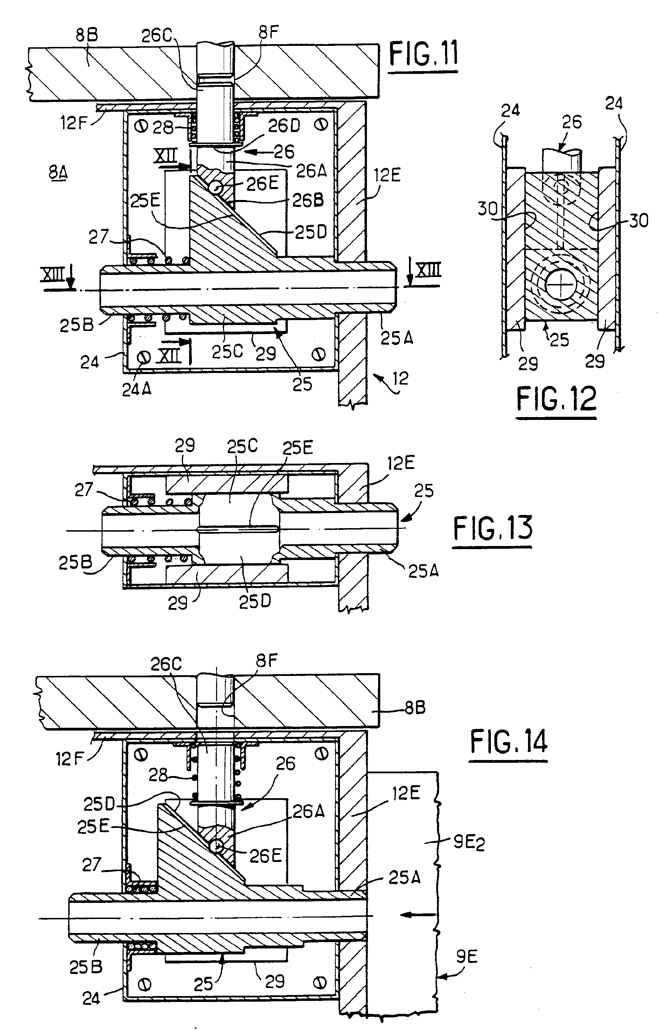

Puis, l'automate 9, après que les informations correspondant à l'emplacement du chariot souhaité et de son contenu sont entrées dans l'unité par le clavier du micro-ordinateur, se déplace sur les rails de guidage 16 et 17 pour se présenter dans la configuration illustrée sur la figure 15A. A ce moment, la surface d'appui 9E1 des moyens de préhension s'engage dans l'évidement 8C prévu dans la base 8D du conteneur 8, jusqu'à ce que la surface d'appui 9E2 de l'automate entre au contact de la face latérale 12E du réceptacle à saisir 12. En regard de la figure 14, la surface d'appui 9E2 agit alors sur les moyens de verrouillage 23 et pousse les extrémités 25A des tiges 25 faisant saillie de la face latérale 12E dans les boîtiers 24 en comprimant les ressorts 27. Simultanément, la rampe 25D de chaque tige 25 recule, de sorte que, sous l'action des ressorts 28, les tiges 26 sont pressées contre les rampes, les billes 26D desdites tiges 26 coulissant respectivement dans les gorges 25E des rampes. Les extrémités 26C des tiges 26 sont alors dégagées des perçages 8F ménagés dans les cloisons de séparation 8B délimitant le compartiment 8A. La position des moyens de verrouillage 23, libérant le réceptacle 12 de son compartiment 8 sous l'action de la surface d'appui 9E2 des moyens de préhension, est représentée sur la figure 14.

Lorsque les deux surfaces d'appui 9E1 et 9E2 sont respectivement au contact des faces inférieure 12B et latérale 12E du réceptacle 12, les électroaimants constitués par les plaques métalliques 20A du réceptacle et 20B de l'automate sont en regard les uns des autres et sont actionnés, ce qui bloque le réceptacle 12 sur les surfaces d'appui 9E1 et 9E2 de l'automate. Le cycle de fonctionnement de l'automate 9 se poursuit.

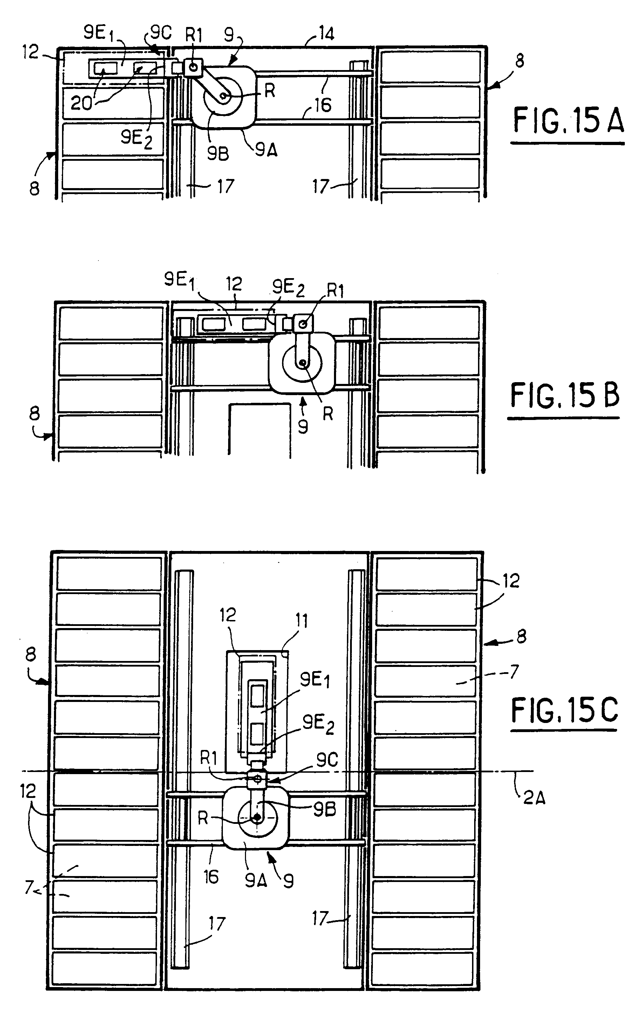

Par des rotations du dispositif de levage 9C autour de l'axe R1 et de la potence 9B autour de l'axe R, et, par des déplacements de l'embase 9A de l'automate 9 par l'intermédiaire des rails de guidage 16 et 17 selon les axes X-X et Y-Y, l'automate 9 (figures 15B et 15C) se présente sous le passage 11 séparant la soute 4 de l'emplacement de réception 10.

Sur la figure 15C, on voit que le réceptacle 12, porté et immobilisé sur les surfaces d'appui 9E1 et 9E2 de l'automate 9, se trouve à la verticale du passage 11. La position de l'automate 9, à ce moment de son cycle, correspond également à celle représentée en traits mixtes sur la figure 2. Ensuite, la partie mobile 9E du dispositif de levage 9C est actionnée entraînant le déplacement du réceptacle 12 selon l'axe Z-Z, qui est ainsi hissé jusqu'à l'emplacement de réception 10 de l'office 6, après avoir basculé la trappe 11A du passage 11.

Lorsque le réceptacle 12 est situé dans l'emplacement 10, comme le montre la figure 1, un signal sonore et/ou lumineux prévient le personnel de bord qui, en ouvrant la porte d'accès 15 de l'emplacement 10 et en basculant le levier 12C du réceptacle, peut extraire le chariot 7 et procéder à la distribution des plateaux repas.

Le réceptacle 12 peut rester en attente dans l'emplacement 10 jusqu'à la réintroduction du chariot 7, alors vide, dans le réceptacle, ou être adressé directement dans son compartiment de stockage par l'automate.

## Revendications

1. Système d'approvisionnement d'une enceinte (6) en chariots ou analogue, ladite enceinte (6) étant prévue notamment dans la cabine (3) des passagers d'un aéronef et lesdits chariots étant disposés dans la soute (4) dudit aéronef, et ledit système comportant :
- des moyens pour déplacer lesdits chariots (7), agencés dans la soute (4) et susceptibles d'amener chacun desdits chariots à ladite enceinte (6) par l'intermédiaire d'un passage (11) ménagé entre la soute et l'enceinte ; et
- des moyens pour commander lesdits moyens de déplacement, caractérisé en ce que lesdits chariots (7) sont agencés dans au moins un conteneur de stockage (8) situé dans la soute (4), en ce que lesdits moyens de déplacement comprennent un automate commandable (9) qui est agencé dans un conteneur (14), adjacent au conteneur de stockage (8) desdits chariots, et qui est susceptible de saisir, par des moyens de préhension (9E), chacun desdits chariots pour l'amener dans ladite enceinte, ledit passage (11) débouchant dans le conteneur (14) portant l'automate (9), et en ce que lesdits moyens de commande comprennent une unité de commande programmable (13) reliée audit automate (9) et contenant les informations relatives à la position desdits chariots dans le conteneur et aux types de produits contenus dans chacun d'eux, de façon que, en fonction des informations transmises par ladite unité, ledit automate se déplace pour saisir ledit chariot correspondant et l'amener de ladite soute à ladite enceinte.

2. Système selon la revendication 1,
caractérisé en ce que ledit automate déplaçable (9) se compose :
- d'une embase (9A), liée à la base dudit conteneur (14) et susceptible de se déplacer par rapport à la base selon deux axes X-X et Y-Y perpendiculaires entre eux, ledit axe X-X étant parallèle à l'axe longitudinal (2A) de l'aéronef ;
- d'une potence (9B), prolongeant ladite embase (9A) et susceptible de pivoter, par rapport à l'embase, autour d'un axe de rotation R orthogonal au plan formé par les axes X-X et Y-Y de la base, ainsi qu'à l'axe longitudinal de l'aéronef ; et
- d'un dispositif de levage (9C), comprenant lesdits moyens de préhension et monté articulé sur la potence (9B) autour d'un axe de rotation R1, parallèle à l'axe de rotation R de la potence, lesdits moyens de préhension étant susceptibles de coulisser selon un axe Z-Z parallèle aux axes de rotation R et R1 et orthogonal au plan formé par les axes X-X et Y-Y.

3. Système selon la revendication 2,
caractérisé en ce que ladite embase (9A) de l'automate est montée sur au moins un premier rail de guidage (16), correspondant à l'axe X-X et le long duquel l'embase est susceptible de se déplacer, ledit premier rail de guidage étant lui-même monté, de façon coulissante, sur au moins un second rail de guidage (17) correspondant à l'axe Y-Y et fixé à la base dudit conteneur (14).

4. Système selon l'une des revendications 2 ou 3,
caractérisé en ce que ledit dispositif de levage (9C) dudit automate comprend une partie fixe (9D), montée articulée sur la potence (9B) autour de l'axe de rotation R1, et une partie mobile (9E) correspondant auxdits moyens de préhension et susceptible de coulisser le long de l'axe Z-Z par des moyens de levage associés aux deux parties.

5. Système selon l'une des revendications 2 à 4,
caractérisé en ce que lesdits moyens de préhension (9E) comportent au moins deux surfaces d'appui orthogonales formant un dièdre, dont l'une (9E1), disposée parallèlement au plan formé par les axes X-X et Y-Y, est destinée à venir au contact de la face inférieure dudit chariot (7) à saisir, et dont l'autre (9E2), parallèle à l'axe Z-Z et orthogonale au plan X-X et Y-Y, est destinée à venir s'appliquer contre la face latérale correspondante dudit chariot.

6. Système selon l'une quelconque des revendications précédentes 1 à 5,
caractérisé en ce que ledit conteneur de stockage (8) présente une pluralité de compartiments (8A) destinés à la réception desdits chariots et alignés selon une direction orthogonale à l'axe longitudinal (2A) dudit aéronef.

7. Système selon la revendication 6,
caractérisé en ce que lesdits chariots (7) sont respectivement logés dans des réceptacles (12), chaque réceptacle, qui contient un chariot, étant lui-même agencé dans l'un des compartiments (8A) dudit conteneur de stockage (8) en étant susceptible d'être retiré dudit compartiment, par les moyens de préhension de l'automate, selon une direction parallèle à l'axe longitudinal de l'aéronef.

8. Système selon la revendication 7,
caractérisé en ce que lesdits réceptacles (12) présentent une forme parallélépipédique correspondant à celle desdits compartiments et chaque réceptacle est pourvu d'une ouverture latérale (12A) par laquelle est susceptible d'être introduit ou retiré le chariot correspondant (7).

9. Système selon l'une des revendications 7 ou 8,
caractérisé en ce que chacun desdits chariots (7) est immobilisé dans le réceptacle correspondant (12) par un mécanisme à levier basculant (12C), monté pivotant sur chaque réceptacle et s'appliquant contre la face latérale (7B) dudit chariot obturant l'ouverture (12A) du réceptacle.

10. Système selon l'une des revendications 7 à 9,
caractérisé en ce que la base (8D) de chaque compartiment, sur laquelle repose le réceptacle (12), présente un évidement (8C) autorisant l'introduction de la surface d'appui correspondante (9E1) desdits moyens de préhension sous la face inférieure (12B) dudit réceptacle.

11. Système selon l'une des revendications 7 à 10,
caractérisé en ce que des moyens de blocage (20) immobilisent en position le réceptacle (12) contenant le chariot choisi aux moyens de préhension (9E) dudit automate.

12. Système selon la revendication 11,
caractérisé en ce que lesdits moyens de blocage (20) sont du type électromagnétique et comprennent des plaques métalliques (20B) fixées aux surfaces d'appui des moyens de préhension (9E) et qui sont susceptibles de coopérer avec des plaques métalliques (20A) situées en correspondance sur la face inférieure (12B) et sur la face latérale (12E) de chaque réceptacle, opposée à ladite ouverture latérale (12A).

13. Système selon l'une des revendications 7 à 12,
caractérisé en ce que lesdits réceptacles (12) sont immobilisés respectivement dans les compartiments ( 8A) dudit conteneur (8) par des moyens de vérouillage libérables (23).

14. Système selon la revendication 13,
caractérisé en ce que lesdits moyens de verrouillage (23) sont associés à la face inférieure (12B) de chaque réceptacle et comprennent au moins un boîtier (24) comportant un mécanisme à deux tiges déplaçables (25,26) coopérant perpendiculairement l'une avec l'autre par une rampe inclinée, l'une (25A) des extrémités d'une tige (25) faisant saillie de la face latérale (12E) du réceptacle, tournée vers ledit automate (9) et opposée à l'ouverture, et l'une (26C) des extrémités de l'autre tige (26) s'engageant dans la cloison de séparation (8B) de deux compartiments adjacents (8A) en immobilisant ledit réceptacle au conteneur, de sorte que, sous l'action des moyens de préhension (9E) de l'automate, l'extrémité en saillie de ladite tige (25) s'enfonce dans ledit boîtier, tandis que, simultanément, l'extrémité (26C) de l'autre tige, sous l'action d'un ressort de rappel (28), se dégage de la cloison (8B) en libérant ainsi le réceptacle du compartiment correspondant dudit conteneur.

15. Système selon l'une des revendications 7 à 14,
caractérisé en ce que chaque réceptacle (12) est monté sur des chemins de roulement (21) liés à la base (8D) de chacun desdits compartiments (8A).

16. Système selon l'une quelconque des revendications 1 à 15,
caractérisé en ce que ladite unité de commande programmable comporte un micro-ordinateur (13) situé dans l'enceinte de réception (6) desdits chariots.

## Patentansprüche

1. System zur Versorgung eines Raumes (6) mit Wagen oder ähnlichem, wobei der besagte Raum (6) insbesondere in der Passagierkabine (3) eines Luftfahrzeugs vorgesehen ist und die besagten Wagen im Frachtraum (4) des besagten Luftfahrzeugs gelagert sind, und das System folgendes enthält
- Mittel zur Verlagerung der besagten im Frachtraum (4) gelagerten Wagen (7) und die geeignet sind, jeden der besagten Wagen in den besagten Raum (6) über einen zwischen dem Frachtraum und dem Kabinenraum angeordneten Durchgang (11) zu befördern; und
- Mittel zur Steuerung der besagten Verlagerungsmittel, dadurch gekennzeichnet, daß die besagten Wagen (7) in mindestens einem im Frachtraum (4) untergebrachten Lagerungscontainer (8) angeordnet sind, daß die besagten Verlagerungsmittel einen steuerbaren Automaten (9) enthalten, der in einem neben dem Lagerungscontainer (8) der besagten Wagen angeordneten Container (14) untergebracht ist und geeignet ist, mit Greifmitteln (9E) jeden der besagten Wagen zu greifen, um ihn in den besagten Kabinenraum zu befördern, wobei der besagte Durchgang (11) im Container (14) mit dem Automaten (9) mündet, und daß die besagten Steuermittel eine programmierte Steuereinheit (13) enthalten, welche mit dem besagten Automaten (9) verbunden ist und Informationen bezüglich der Lage der besagten Wagen im Container und bezüglich der in jedem von ihnen enthaltenen Produktarten enthält, so daß der besagte Automat sich entsprechend der von der besagten Einheit ihm übermittelten Informationen bewegt, um den entsprechenden besagten Wagen zu ergreifen und ihn aus dem besagten Frachtraum in den besagten Kabinenraum zu befördern.

2. System nach dem Anspruch 1,
dadurch gekennzeichnet, daß der besagte bewegliche Automat (9) folgendes enthält
- eine mit dem Boden des besagten Containers (14) verbundene Fußplatte (9A), die sich in Bezug auf den containerboden entlang zwei unter sich senkrechten Achsen X-X und Y-Y bewegen kann, wobei besagte Achse X-X parallel zur Längsachse (2A) des Luftfahrzeugs ist;
- einen Tragarm (9B), der die besagte Fußplatte (9A) verlangert und die in Bezug auf die Fußplatte um eine Drehachse R, die rechtwinklig zur durch die Achsen X-X und Y-Y gebildeten Ebene, sowie zur Längsachse des Luftfahrzeugs angeordnet ist, schwenkbar ist; und
- eine Hebevorrichtung (9C), welche die genannten Greifmittel enthält und an den Tragarm (9B) um eine zur Drehachse R des Tragarms parallelen Drehachse R1 angelenkt ist, wobei die Greifmittel entlang der Achse Z-Z, die parallel zu den Drehachsen R und R1 und rechtwinklig zu der durch die Achsen X-X und Y-Y gebildeten Ebene verläuft, verschiebbar sind.

3. System nach dem Anspruch 2,
dadurch gekennzeichnet, daß die besagte Fußplatte (9A) des Automaten auf mindestens einer ersten Führungsschiene (16) montiert ist, welche der Achse X-X entspricht und auf welcher sich die Fußplatte bewegen kann, wobei die erste Führungsschiene verschiebbar auf mindestens einer zweiten Führungsschiene (17), die der Achse Y-Y entspricht und am Boden des besagten Containers (14) befestigt ist, montiert ist.

4. System nach einem der Ansprüche 2 oder 3,
dadurch gekennzeichnet, daß die besagte Hebevorrichtung (9C) des besagten Automaten einen feststehenden Teil (9D) enthält, welcher an den Tragarm (9B) um die Drehachse R1 angelenkt ist, und einen beweglichen Teil (9E), welcher den besagten Greifmitteln entspricht und entlang der Achse Z-Z über mit den beiden Teilen verbundene Hebemittel verschiebbar ist.

5. System nach einem der Ansprüche 2 bis 4,
dadurch gekennzeichnet, daß die besagten Greifmittel (9E) wenigstens zwei rechtwinklige Anlageflächen, die einen Dieder bilden, enthalten, wovon eine (9El), die parallel zur durch die Achsen X-X und Y-Y gebildeten Ebene ist, dazu bestimmt ist, in Kontakt mit der unteren Fläche des besagten zu greifenden Wagens (7) zu kommen, und die andere (9E2), die parallel zur Achse Z-Z und rechtwinklig zur Ebene X-X und Y-Y ist, dazu bestimmt ist, sich an die entsprechende Seitenfläche des besagten Wagens anzusetzen.

6. System nach igendeinem der vorhergehenden Ansprüche 1 bis 5,
dadurch gekennzeichnet, daß der besagte Lagerungscontainer (8) eine Vielzahl von Abteilen (8A) aufweist, zur Aufnahme der besagten Wagen, und die in rechtwinkliger Richtung zur Längsachse (2A) des besagten Luftfahrzeugs aneinandergereiht sind.

7. System nach dem Anspruch 6,
dadurch gekennzeichnet, daß die besagten Wagen (7) jeweils in Aufnahmebehältern (12) untergebracht sind, wobei jeder Aufnahmebehälter, der einen Wagen enthält, in einem der Abteile (8A) des besagten Lagerungscontainers (8) untergebracht ist und aus dem besagten Abteil durch die Greifmittel des Automaten in einer der Längsachse des Luftfahrzeugs parallelen Richtung herausgezogen werden kann.

8. System nach dem Anspruch 7,
dadurch gekennzeichnet, daß die besagten Aufnahmebehälter (12) die Form eines Parallelepidons haben, welche der der besagten Abteile entspricht und daß jeder Aufnahmebehälter mit einer seitlichen Öffnung (12A) versehen ist,durch welche der entsprechende Wagen (7) eingebracht oder herausgenommen werden kann.

9. System nach einem der Ansprüche 7 oder 8,
dadurch gekennzeichnet, daß jeder der besagten Wagen (7) in dem entsprechenden Aufnahmebehälter (12) mittels eines Mechanismus mit schwenkbarem Hebel (12C) festgehalten ist, wobei der Mechanismus an jedem Behälter angebracht ist und gegen die Seitenfläche (7B) des Wagens drückt und die Öffnung (12A) des Aufnahmebehälters verriegelt.

10. System nach einem der Ansprüche 7 bis 9,
dadurch gekennzeichnet, daß der Boden (8D) jedes Abteils, worauf der Aufnahmebehälter (12) steht, eine Aussparung (8C) aufweist, welche das Einführen der entsprechenden Auflagefläche (9E1) der besagten Greifmittel unter die untere Fläche (12B) des besagten Aufnahmebehälters gestattet.

11. System nach einem der Ansprüche 7 bis 10,
dadurch gekennzeichnet, daß Blokiermittel (20) den Aufnahmebehälter (12), welcher den von den Greifmitteln (9E) des besgten Automaten ausgewählten Wagen enthält, in der richtigen Lage festhält.

12. System nach dem Anspruch 11,
dadurch gekennzeichnet, daß die besagten Blockiermittel (20) elektro-magnetischer Art sind und Metallplatten (20B) enthalten, welche an den Anlageflächen der Greifmittel (9E) angebracht sind und mit Metallplatten (20A), die entsprechend an der unteren Fläche (12B) und an der der besagten seitlichen Öffnung (12A) gegenüberliegenden Seitenfläche (12E) angebracht sind, zusammenwirken.

13. System nach einem der Ansprüche 7 bis 12,
dadurch gekennzeichnet, daß die besagten Aufnahmebehälter (12) durch freistellbare Verriegelungsmittel (23) jeweils in den Abteilen (8A) des besagten Containers (8) festgehalten werden.

14. System nach dem Anspruch 13,
dadurch gekennzeichnet, daß die besagten Verriegelungsmittel (23) mit der unteren Fläche (12B) jedes Aufnahmebehälters verbunden sind und mindestens ein Gehäuse (24) enthalten, welches einen Mechanismus mit zwei verschiebbaren Stiften (25, 26) enthält, wobei die Stifte senkrecht zueinander über eine geneigte Fläche zusammenwirken, dadurch, daß das eine (25A) der Enden eines Stiftes (25) aus der Seitenfläche (12E) des Aufnahmebehälters, die gegen den besagten Automaten (9) gerichtet und entgegengesetzt der Öffnung ist, herausragt und das andere (26C) der Enden des anderen Stiftes (26) in die Trennwand (8B) zwischen zwei nebeneinander liegenden Abteilen (8A) eingreift und so den besagten Aufnahmebehälter mit dem Container verriegelt, so daß, unter Einwirkung der Greifmittel (9E) des Automaten, das herausragende Ende des besagten Stiftes (25) in das besagte Gehäuse eingreift, während gleichzeitig das Ende (26C) des anderen Stiftes unter der Wirkung einer Spannfeder (28) sich von der Trennwand (88) löst und so den Aufnahmebehälter vom entsprechenden Abteil des besagten Containers freigibt.

15. System nach einem der Ansprüche 7 bis 14,
dadurch gekennzeichnet, daß jeder Aufnahmebehälter (12) auf Rollbahnen (21), die mit dem Boden (8D) jedes der besagten Abteile (8A) verbunden sind, angebracht ist.

16. System nach igendeinem der Ansprüche 1 bis 15,
dadurch gekennzeichnet, daß die besagte programmierbare Steuereinheit einen Mikrocomputer (13) enthält, der sich im Empfangsraum (6) der besagten Wagen befindet.

## Claims

1. System for supplying an enclosure (6) with trolleys or the like, the said enclosure (6) being provided especially in the passenger cabin (3) of an aircraft, and the said trolleys being disposed in the hold (4) of the said aircraft, and the said system including:
- means for moving the said trolleys (7), arranged in the hold (4) and capable of bringing each of the said trolleys to the said enclosure (6) via a passage (11) formed between the hold and the enclosure; and
- means for controlling the said movement means, characterised in that the said trolleys (7) are arranged in at least one stowage container (8) situated in the hold (4) and in that the said movement means comprise a controllable automatic unit (9) which is arranged in a container (14), adjacent to the stowage container (8) of the said trolleys, and which is capable of taking hold, via gripping means (9E), of each of the said trolleys in order to bring them into the said enclosure, the said passage (11) opening out into the container (14) carrying the automatic unit (9), and in that the said control means comprise a programmable control unit (13) connected to the said automatic unit (9) and containing the information relating to the position of the said trolleys in the container and to the types of products contained in each of them, in such a way that, on the basis of the information transmitted by the said unit, the said automatic unit moves to take hold of the said corresponding trolley and to bring it from the said hold to the said enclosure.

2. System according to Claim 1, characterised in that the said movable automatic unit (9) is composed of:
- a baseplate (9A), linked to the base of the said container (14) and capable of moving with respect to the base along two axes, X-X and Y-Y which are perpendicular to each other, the said X-X axis being parallel to the longitudinal axis (2A) of the aircraft;
- a support beam (9B), extending the said baseplate (9A) and capable of pivoting, with respect to the baseplate, around a rotation axis R orthogonal to the plane formed by the X-X and Y-Y axes of the base, and to the longitudinal axis of the aircraft; and,
- a lifting device (9C), comprising the said gripping means and mounted articulated onto the support beam (9B) around a rotation axis R1 parallel to the rotation axis R of the support beam, the said gripping means being capable of sliding along an axis Z-Z parallel to the rotation axes R and R1 and orthogonal to the plane formed by the X-X and Y-Y axes.

3. System according to Claim 2, characterised in that the said baseplate (9A) of the automatic unit is mounted on at least one first guide rail (16), corresponding to the X-X axis and along which the baseplate is capable of moving, the said first guide rail being itself mounted, so as to slide, on at least one second guide rail (17) corresponding to the Y-Y axis and fixed to the base of the said container (14).

4. System according to one of Claims 2 or 3, characterised in that the said lifting device (9C) of the said automatic unit comprises a fixed part (9D), mounted articulated on the support beam (9B) around the rotation axis R1, and a movable part (9E) corresponding to the said gripping means and capable of sliding along the Z-Z axis via lifting means associated with the two parts.

5. System according to one of Claims 2 to 4, characterised in that the said gripping means (9E) include at least two orthogonal bearing surfaces forming a dihedral, one of which (9E1), disposed parallel to the plane formed by the X-X and Y-Y axes, is intended to come into contact with the lower face of the said trolley (7) to be taken hold of, and the other of which (9E2), parallel to the Z-Z axis and orthogonal to the X-X and Y-Y plane, is intended to be applied against the corresponding side face of the said trolley.

6. System according to any one of the preceding Claims 1 to 5, characterised in that the said stowage container (8) exhibits a plurality of compartments (8A) intended to accommodate the said trolleys and aligned along a direction orthogonal to the longitudinal axis (2A) of the said aircraft.

7. System according to Claim 6, characterised in that the said trolleys (7) are respectively lodged in receptacles (12), each receptacle, which contains a trolley, being itself arranged in one of the compartments (8A) of the said stowage container (8) while being capable of being withdrawn from the said compartment, by the gripping means of the automatic unit, along a direction parallel to the longitudinal axis of the aircraft.

8. System according to Claim 7, characterised in that the said receptacles (12) exhibit a parallelepipedal form corresponding to that of the said compartments, and each receptacle is provided with a lateral aperture (12A) through which the corresponding trolley (7) is capable of being inserted or withdrawn.

9. System according to either of Claims 7 or 8, characterised in that each of the said trolleys (7) is immobilised in the corresponding receptacle (12) by a tilting-lever mechanism (12C), mounted so as to pivot on each receptacle and being applied against the side face (7B) of the said trolley blocking the aperture (12A) of the receptacle.

10. System according to one of Claims 7 to 9, characterised in that the base (8D) of each compartment, on which the receptacle (12) rests, exhibits a recess (8C) enabling the corresponding bearing surface (9E1) of the said gripping means to be inserted under the lower face (12B) of the said receptacle.

11. System according to one of Claims 7 to 10, characterised in that blocking means (20) immobilise the receptacle (12) in position, the receptacle containing the trolley chosen by the gripping means (9E) of the said automatic unit.

12. System according to Claim 11, characterised in that the said blocking means (20) are of the electromagnetic type and comprise metal plates (20B) fixed to the bearing surfaces of the gripping means (9E) and which are capable of interacting with metal plates (20A) situated in a corresponding position on the lower face (12B) and on the side face (12E) of each receptacle, opposite the said side aperture (12A).

13. System according to one of Claims 7 to 12, characterised in that the said receptacles (12) are immobilised respectively in the compartments (8A) of the said container (8) by releasable latching means (23).

14. System according to Claim 13, characterised in that the said latching means (23) are associated with the lower face (12B) of each receptacle and comprise at least one housing (24) including a mechanism with two movable rods (25,26) interacting perpendicularly with one another via an inclined ramp, one (25A) of the extremities of a rod (25) protruding from the side face (12E) of the receptacle, turned towards the said automatic unit (9) and opposite the aperture, and one (26C) of the extremities of the other rod (26) engaging in the separation partition (8B) of two adjacent compartments (8A), immobilising the said receptacle in the container, in such a way that, under the action of the gripping means (9E) of the automatic unit, the protruding extremity of the said rod (25) is driven into the said housing, while, simultaneously, the extremity (26C) of the other rod, under the action of a return spring (28), disengages from the partition (8B), thus releasing the receptacle from the corresponding compartment of the said container.

15. System according to one of Claims 7 to 14, characterised in that each receptacle (12) is mounted on trackways (21) linked to the base (8D) of each of the said compartments (8A).

16. System according to any one of Claims 1 to 15, characterised in that the said programmable control unit includes a microcomputer (13) situated in the enclosure (6) for receiving the said trolleys.
